# EUROPÄISCHE PATENTANMELDUNG

(11) **EP 1 757 493 A1**
(43) Veröffentlichungstag der Anmeldung: **28.02.2007**
(21) Anmeldenummer: 06016464.7
(22) Anmeldetag: 07.08.2006
(51) Int. Cl.: B60R 21/231

(54) **Gassack für ein Fahrzeuginsassen- Rückhaltesystem**

(30) Priorität: 26.08.2005 DE 202005013509 U
(71) Anmelder: TRW Automotive Safety Systems GmbH, 63743 Aschaffenburg (DE)
(72) Erfinder: Keutz, Markus, 64380 Rossdorf (DE)
(74) Vertreter: Kitzhofer, Thomas

(57) **Zusammenfassung**

Ein Gassack, insbesondere für ein Fahrzeuginsassen-Rückhaltesystem, hat ein Oberteil (14) und ein damit verbundenes Unterteil (12). Ein das Unterteil (12) bildender Zuschnittsabschnitt (16) hat flach ausgebreitet eine im wesentlichen trapez- oder ringsegmentförmige Gestalt. Im aufgeblasenen Zustand des Gassacks (10) ist das Unterteil (12) trichterförmig.

## Beschreibung

Die Erfindung betrifft einen Gassack, insbesondere für ein Fahrzeuginsassen-Rückhaltesystem, mit einem Oberteil und einem damit verbundenen Unterteil.

Gassäcke werden nach wie vor hauptsächlich von Hand gefertigt. Eine möglichst einfache Konstruktion wirkt sich daher günstig auf die Kosten aus. Für den Schutz des Fahrers wird oft ein Gassack aus zwei identischen, runden Gewebelagen verwendet, die entlang ihres Umfangs miteinander vernäht sind. Diese Gassäcke sind jedoch weder bezüglich der resultierenden Form noch bezüglich der Strömung des Füllgases optimal. Beispielsweise müssen zum Schutz der Gassackwand vor den heißen Gasen im Unterteil zusätzliche Verstärkungslagen angebracht werden, was den Gassack schwerer, steifer und teurer macht.

Die Erfindung zielt auf die Optimierung eines Gassacks.

Hierzu ist vorgesehen, daß ein das Unterteil bildender Zuschnittsabschnitt flach ausgebreitet eine im wesentlichen trapez- oder ringsegmentförmige Gestalt hat und im aufgeblasenen Zustand des Gassacks das Unterteil trichterförmig ist. Durch eine Änderung der Form des Zuschnitts des Unterteils in dieser Art läßt sich bei gleichem Volumen wie bei einem herkömmlichen Gassack die Tiefe des Gassacks erhöhen, bzw. bei gleicher Tiefe das Volumen des Gassacks reduzieren. Gleichzeitig kommt aufgrund der Trichterform das Gas weniger in Kontakt mit dem Gewebe des Unterteils, weshalb Verstärkungslagen reduziert werden können.

Oberteil und Unterteil können wie bei den bisherigen Gassäcken auch umlaufend entlang einer Außenumfangslinie des Oberteils miteinander verbunden sein.

Es ist nur eine zusätzliche Verbindung erforderlich, die die beiden Schrägseiten des Zuschnittsabschnitts des Unterteils miteinander verbindet.

Das Oberteil und das Unterteil bilden Teil einer Außenhülle des Gassacks. Die Außenhülle des Gassacks besteht vorzugsweise ausschließlich aus dem Ober- und dem Unterteil.

Außerdem können an der Schmalseite des Zuschnittsabschnitts des Unterteils mehrere Fortsätze zur Befestigung des Gassacks, z.B. in einem Gehäuse eines Gassackmoduls, angeordnet sein. Diese Fortsätze lassen sich einstückig mit dem Zuschnittsabschnitt des Unterteils ausbilden. Bevorzugt verlaufen die Fortsätze in Richtung zur Spitze des Trichters, was eine besonders gute Krafteinleitung in das Gassackgewebe des Unterteils zur Folge hat.

Vorteilhaft weisen die Fortsätze Öffnungen zur Befestigung des Gassacks in einem Gassackmodul auf, wodurch separate Befestigungsmittel ganz oder teilweise eingespart werden können. Natürlich lassen sich auch andere Befestigungslösungen verwenden.

Ein das Oberteil bildende Zuschnittsabschnitt ist flach ausgebreitet bevorzugt im wesentlichen kreisförmig oder elliptisch.

Die Erfindung wird im folgenden unter Bezugnahme auf die beigefügten Zeichnungen anhand eines Ausführungsbeispiels näher beschrieben.

In den Zeichnungen zeigen:
- Figur 1a einen flach ausgebreiteten, das Unterteil eines erfindungsgemäßen Gassacks bildenden Zuschnittsabschnitt;
- Figur 1b einen flach ausgebreiteten, das Oberteil des erfindungsgemäßen Gassacks bildenden Zuschnittsabschnitt;
- Figur 2 die Ausrichtung des Gewebes im Unterteil;
- Figur 3 den erfindungsgemäßen Gassack nach einem ersten Nähschritt;
- Figur 4 den Gassack aus Figur 3 nach einem zweiten Nähschritt; und
- Figur 5 eine schematische Ansicht des erfindungsgemäßen Gassacks.

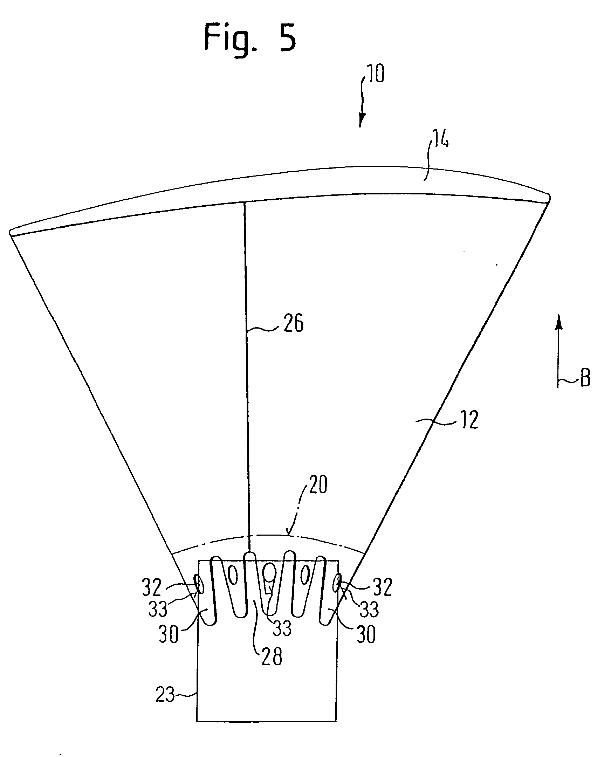

Figur 5 zeigt einen Gassack 10 in einem fertig zusammengenähten, flach ausgebreiteten, aber nicht aufgeblasenen Zustand. Der Gassack 10 hat ein Unterteil 12 sowie ein Oberteil 14. Unterteil 12 und Oberteil 14 bilden jeweils einen Abschnitt der Außenhülle des Gassacks 10, wie Figur 5 zeigt.

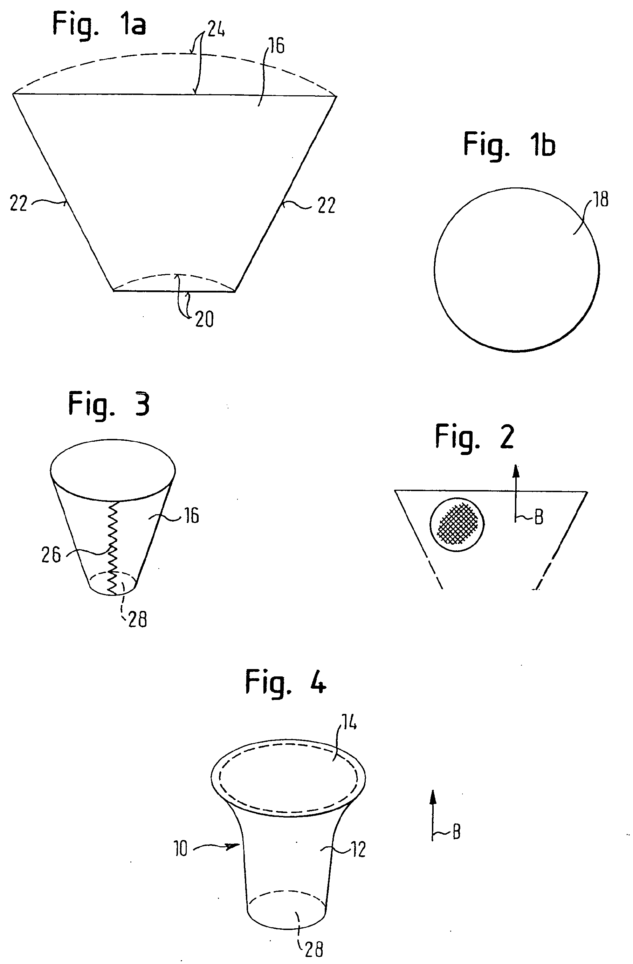

Die den jeweiligen Zuschnittsabschnitt 16, 18 für das Unterteil 12 bzw. das Oberteil 14 bildenden Gewebestücke sind in den Figuren 1a und 1b flach ausgebreitet gezeigt. Der das Unterteil 12 bildende Zuschnittsabschnitt 16 hat im wesentlichen eine Trapezform (durchgezogene Linien) bzw. alternativ eine Ringsegmentform (gestrichelte Linien). Der Zuschnittsabschnitt 16 weist eine Schmalseite 20, zwei Schrägseiten 22 sowie eine lange Seite 24 auf. Die Schmalseite 20 und die lange Seite 24 verlaufen bei Trapezform des Zuschnittsabschnitt 16 gerade und bei Ringsegmentform des Zuschnittsabschnitts 16 gekrümmt.

Der das Oberteil 14 bildende Zuschnittsabschnitt 18 ist kreisförmig oder elliptisch.

Der Zuschnittsabschnitt 16, der das Unterteil 12 bildet, ist so ausgerichtet, daß der Verlauf der Kett- und Schußfäden des Gassackgewebes, wie in Figur 2 gezeigt, schräg zur späteren Belastungsrichtung B verläuft. Die Belastungsrichtung B fällt mit der Entfaltungsrichtung des Gassacks 10 aus einem Gehäuse 23 eines Gassackmoduls (schematisch in Figur 5) zusammen.

Zur Fertigung des Gassacks 10 werden zunächst die beiden Schrägseiten 22 des Zuschnittsabschnitts 16 des Unterteils 12 miteinander vernäht. Im gezeigten Beispiel wird hierfür eine zickzackförmige Stretchnaht 26 verwendet, um mehr Flexibilität in Belastungsrichtung B zu erhalten. Andere Verbindungsmethoden wie z.B. Kleben oder andere Nahtformen können selbstverständlich auch eingesetzt werden.

Anschließend wird der Zuschnittsabschnitt 18, der das Oberteil 14 bildet, entlang seines Umfangs mit der langen Seite 24 des Zuschnittsabschnitts 16 vernäht oder anderweitig verbunden. Der Gassack 10 hat nun im aufgeblasenen Zustand die in Figur 4 gezeigte Form. Das Unterteil 12 bildet einen Trichter, dessen Spitze vom Oberteil 14 weggerichtet ist. An der Spitze des Trichters weist der Gassack 10 eine Einblasöffnung 28 auf. Durch die Einblasöffnung 28 strömt von einem Gasgenerator (nicht gezeigt) freigesetztes Gas in das Innere des Gassacks 10.

Der Gassack 10 ist am Rand der Einblasöffnung 28 so ausgebildet, daß er mit dem Gehäuse 23 eines Gassackmoduls, z.B. einem Generatorträger, verbunden werden kann. In Figur 5 sind mehrere, z.B. insgesamt 12, einstückig mit dem Unterteil 12 ausgebildete Fortsätze 30 gezeigt. In jedem Fortsatz 30 ist eine Öffnung 32 vorgesehen, die zur Befestigung des Gassacks 10 über einen angeformten Haken 33 oder ähnliches in einem Generatorträger oder Modulgehäuse 23 gezogen werden kann (drei Haken 33 sind exemplarisch in Figur 5 angedeutet).

Bei dem in Figur 5 gezeigten Gassack 10 ist die Schmalseite 20 durch eine gedachte, strichpunktierte Linie knapp oberhalb der Fortsätze 30 gebildet.

Die Fortsätze 30 verlaufen alle zur Spitze des Trichters gerichtet und in Verlängerung der Trichterhülle. Somit ist die Ausrichtung und Anordnung aller Fortsätze 30 ideal, um in Belastungsrichtung B auftretende Kräfte aufzunehmen.

Die Fortsätze 30 werden z.B. durch geeignete Ausschnitte im Zuschnittsabschnitt 16 hergestellt werden. Sie können aber auch aus separaten Gewebeteilen hergestellt und mit dem Zuschnittsabschnitt 16 verbunden werden.

Zusätzlich können (nicht gezeigte) Verstärkungslagen am Unterteil 12 vorgesehen sein. Es ist auch möglich, nur die Fortsätze 30 zu verstärken.

Gassäcke dieser Art lassen sich selbstverständlich nicht nur im Lenkrad, sondern auch an anderen Stellen des Fahrzeugs einsetzen.

## Patentansprüche

1. Gassack für ein Fahrzeuginsassen-Rückhaltesystem,
mit einem Oberteil (14) und einem damit verbundenen Unterteil (12),
**dadurch gekennzeichnet, daß** ein das Unterteil (12) bildender Zuschnittsabschnitt (16) flach ausgebreitet eine im wesentlichen trapez- oder ringsegmentförmige Gestalt hat und daß im aufgeblasenen Zustand des Gassacks (10) das Unterteil (12) trichterförmig ist.

2. Gassack nach Anspruch 1, **dadurch gekennzeichnet, daß** Oberteil (14) und Unterteil (12) umlaufend entlang einer Außenumfangslinie des Oberteils (14) miteinander verbunden sind.

3. Gassack nach einem der vorhergehenden Ansprüche, **dadurch gekennzeichnet, daß** die beiden Schrägseiten (22) des Zuschnittsabschnitts (16) des Unterteils (12) miteinander verbunden sind.

4. Gassack nach einem der vorhergehenden Ansprüche, **dadurch gekennzeichnet, daß** an der Schmalseite (20) des Zuschnittsabschnitts (16) des Unterteils (12) mehrere Fortsätze (30) zur Befestigung des Gassacks (10) angeordnet sind.

5. Gassack nach Anspruch 4, **dadurch gekennzeichnet, daß** die Fortsätze (30) einstückig mit dem Zuschnittsabschnitt (16) des Unterteils (12) ausgebildet sind.

6. Gassack nach einem der Ansprüche 4 und 5, **dadurch gekennzeichnet, daß** die Fortsätze (30) in Richtung zur Spitze des Trichters verlaufen.

7. Gassack nach einem der Ansprüche 4 bis 6, **dadurch gekennzeichnet, daß** die Fortsätze (30) Öffnungen (32) zur Befestigung des Gassacks (10) in einem Gassackmodul aufweisen.

8. Gassack nach einem der vorhergehenden Ansprüche, **dadurch gekennzeichnet, daß** ein das Oberteil (14) bildender Zuschnittsabschnitt (18) flach ausgebreitet im wesentlichen kreisförmig oder elliptisch ist.

9. Gassack nach einem der vorhergehenden Ansprüche, **dadurch gekennzeichnet, daß** das Oberteil (14) und das Unterteil (12) Teil einer Außenhülle des Gassacks (10) bilden.
